# EUROPEAN PATENT APPLICATION

(11) **EP 4 653 261 A1**
(43) Date of publication of application: **26.11.2025**
(21) Application number: 24178014.7
(22) Date of filing: 24.05.2024
(51) Int. Cl.: B60Q 3/76, B60Q 3/80

(54) **METHOD FOR ADAPTING INTERIOR LIGHTING OF A CABIN OF A VEHICLE**

(71) Applicant: Volvo Car Corporation, 405 31 Göteborg (SE)
(72) Inventor: PEREZ BARRERA, Oswaldo, 40531 Göteborg (SE); MORALES, Gerardo, 40531 Göteborg (SE)
(74) Representative: Maiwald GmbH

(57) **Abstract**

The disclosure relates to a method (100) for adapting interior lighting of a cabin (11) of a vehicle (10), the method (100) comprising:
- obtaining data indicative of a moveable subject (2) inside the cabin (11) from at least one surveillance device (22);
- using the obtained data for tracking a movement of the moveable subject (2); and
- providing instructions for at least one interior lighting device (12) for adapting the interior lighting of the cabin (11), wherein the instructions are based on the tracked movement of the moveable subject (2).

## Description

### TECHNICAL FIELD

The present disclosure relates to a method for adapting interior lighting of a cabin of a vehicle, a data processing system, an interior lighting system for a vehicle, and a vehicle.

### BACKGROUND ART

Interior lighting in vehicles is typically steady in that it always illuminates the same area inside the cabin. Moreover, typically, the interior lighting has a fixed setting, e.g., of a certain illumination intensity, which is typically not adaptable by an occupant or passenger of the vehicle.

However, even if the interior lighting is not steady or adaptable, e.g., in its illumination intensity, the available settings are typically limited and occupants may not conveniently adapt the interior lighting to their preference, to their actions, their tasks inside the vehicle, and similar. Typically, the interior lighting will operate regardless of where the occupant is, what the occupant is doing or which area inside the cabin the occupant wants to have illuminated.

### SUMMARY

The problem is at least partially solved or alleviated by the subject matter of the independent claims of the present disclosure, wherein further examples are incorporated in the dependent claims.

According to a first aspect, there is provided a method for adapting interior lighting of a cabin of a vehicle, the method comprising:
- obtaining data indicative of a moveable subject inside the cabin from at least one surveillance device;
- using the obtained data for tracking a movement of the moveable subject; and
- providing instructions for at least one interior lighting device for adapting the interior lighting of the cabin, wherein the instructions are based on the tracked movement of the moveable subject.

Hence, the method of the first aspect provides for an adaptation of the interior lighting of the cabin when carrying out instructions for one or more interior lighting devices based on a tracked movement of a moveable subject inside the cabin, the tracking of the movement being based on data from the one or more surveillance devices. The data may be periodically or continuously obtained to track the movement of the moveable subject. Thereby, the interior lighting inside the vehicle cabin may be flexibly adapted depending on the movement of the moveable subject. Hence, the interior lighting may be adapted such that it reflects the preferences of the occupant(s) and/or conveniently assists the occupant(s) in their actions and/or tasks inside the cabin.

The interior lighting as mentioned herein is the light or, in other words, illumination, generated or, in other words, produced inside the cabin of the vehicle. The interior lighting is generated by one or more interior lighting devices inside the vehicle. Such interior lighting devices may in particular but not only be mounted at a vehicle roof. Other examples where the one or more interior lighting devices may be mounted are vehicle pillars, e.g., A, B or C pillars, at vehicle doors, at a vehicle dashboard, at a center console, at or under vehicle seats, and similar. In particular, the same and/or different types of interior lighting devices may be distributed throughout different locations or, in other words, positions inside the vehicle, e.g., distributed among the different aforesaid mounting points. Alternatively, the lighting devices may be positioned substantially at the same location, e.g., a central location of the vehicle or cabin. The one or more interior lighting devices may comprise any type of light source. For example, the light source may be based on incandescence, electric discharge, and/or electroluminescence. Accordingly, for example, the light source of each one of the one or more interior lighting devices may be one or more LEDs.

For example, there may be at least two, at least three or at least four interior lighting devices located throughout the cabin, in particular mounted at the vehicle roof and/or one or more of the vehicle pillars. Thereby, different areas inside the cabin may be illuminated and/or the illumination may be generated from different angles onto the same area. The interior lighting devices may be configured such that their one or more light sources are adjustable in position. Such position adjustment configuration may be provided by one or more actuators of each interior lighting device for adjusting the position of the one or more light sources of each interior lighting device.

The surveillance device as mentioned herein may be any device of obtaining the data indicative of the moveable subject inside the cabin, in particular indicative of its position inside the cabin and/or indicative of the subject being moveable, as opposed to a non-moveable subject relative to the cabin, e.g., because it is fixedly attached, such as typically a center console, for example. For example, the surveillance device may be any of a camera, radar sensor, infrared sensor, and/or similar. Moreover, there may be multiple surveillance devices, of the same and/or of a different type.

Whether the interior lighting is to be adapted for a moveable subject or not based on its movement may be specified by an occupant of the vehicle. For example, the vehicle may be configured to react to voice commands, comprise a vehicle interface and/or a connection interface for connecting to an electronic occupant device. Also, it may be possible to have both, a vehicle interface and an electronic occupant device, the content of the vehicle interface being screen-mirrored to the electronic occupant device, e.g., smartphone, tablet computer or similar. Also, it may be possible that the vehicle interface and/or the electronic occupant device display the interior lighting situation on their displays. For example, this may be in a schematic manner, e.g., showing which one of multiple interior lighting devices are switched on or off or how much illumination intensity they provide or, alternatively or in addition, an image or video from a surveillance device in form of a camera may be provided, which may also show one or more moveable subjects. Through voice commands or user inputs on the vehicle interface or electronic occupant device, the occupant or occupants may be able to determine which one of one or multiple moveable subjects are to be tracked and for which the interior lighting is to be adapted based on the tracked movement. For example, in case of an image or video of the cabin, the occupant may be able to conveniently select the subject for which the adaptation of the interior lighting based on its movement shall be carried out.

Moreover, the interior lighting may be adapted based on user settings and/or automatically in addition to the adaptation based on the tracked movement of the moveable subject. For example, the occupant or user may set user settings based on their preferences, wherein the user settings may comprise settings for an illumination intensity, an illumination size, and similar. Additionally, or alternatively such settings may be provided automatically. For example, the method may also comprise subject recognition, in particular in addition to subject position detection or movement tracking. For example, the method may be able, in particular by using computer vision, to identify the type or characteristics of the subject and, based on the type or characteristics, adapt the interior lighting. In particular, the method may be able to determine that the occupant is a child and apply parental control settings for the interior lighting. Alternatively, the user, e.g., parent, may set parental control settings for their child or children manually.

The invention is based on the finding that many of today's vehicles are increasing in cabin size to provide more comfort. Also, with the development and increased use of partially or fully autonomous vehicles, in particular occupant cars, occupants, even the drivers, will be able to perform more tasks and actions while driving or commuting. Also, the occupants may have more preferences with respect to the comfort offered inside the vehicle cabins. A good illumination of the vehicle cabin is important for many tasks or actions of the occupant, e.g., when the occupant is working on any kind of device, e.g., making a video call on their phone or tablet computer, relaxing, sleeping and so on.

Typically, vehicles are using motionless lamps, which may illuminate the same area inside the cabin or, in other words, point to the same direction, thereby illuminating the same area at any time. The illuminated area or, in other words, light output area, typically a light cone, must typically be considerably large to achieve a good overall illumination. However, in some cases, such light can be causing discomfort, e.g., it may disturb other occupants. For example, if one occupant is reading and another occupant wants to sleep but they are sitting next to each other inside the cabin, the comfort of the sleeping occupant may be significantly reduced. Moreover, typically, the light intensity of the interior lighting devices depends on the distance between the illuminated area or object from the light source, without being adjusted based on the distance. These and other restraints are generally limiting the comfort of the occupants of the vehicle. With the method of the first aspect, however, the interior lighting may be adapted such that it reflects the preferences of the occupant(s) and/or conveniently assists the occupant(s) in their actions and/or tasks inside the cabin, thereby increasing the comfort for the occupant(s) of the vehicle.

The method of the first aspect may in particular be a computer implemented method. This means that at least one, multiple or all of the steps of the method may be carried out by one or more computers or computing units. Different steps may be carried out by the same or by different computers. A computer is herein understood as a data processing system or apparatus, which can carry out the steps as defined by the method. The one or more computers may be configured as or provided inside of one more control units of the vehicle, e.g., a central control unit or central computer of the vehicle. Such control unit or computer may also be configured to carry out other control operations than described by the method according to the first aspect.

According to an example, the instructions may be configured to illuminate the detected moveable subject, wherein the illumination of the moveable subject is being adapted. In particular, the instructions are configured such that the interior lighting illuminates the detected moveable subject and adapts the illumination based on the tracked movement thereof. Hence, based on the tracked movement of the subject, the interior lighting may be adapted to illuminate the moveable subject based on its position. Additionally, or alternatively to an adaptation of the interior lighting area based on the position of the moveable subject, the illumination intensity may be adapted based on the position. For example, there may be a fixed or variable light intensity setting, which may be adjustable by the user or occupant. When the fixed light intensity setting is active, the subject will always be illuminated with the same light intensity or, in other words, illumination intensity independent of its position, in particular of its distance to the respective interior lighting device illuminating it. However, if the variable light intensity setting is active, the illumination intensity will be adapted based on the distance between the moveable subject and the at least one interior lighting device. Thereby, it may be ensured that the same brightness on the subject will always be achieved by the interior lighting based on the tracked movement of the subject. Other examples are possible where the instructions may be configured such that a subject is not illuminated, e.g., because the subject is a sleeping human occupant. Such example is described further below.

According to an example, at least one of the data and the tracking of the movement of the moveable subject may be at least based on computer vision. For example, the data may be image and/or video data from at least one camera as the at least one surveillance device. This data may be analyzed by the data processing system executing a computer vision algorithm or, in other words, computer vision may be used to analyze the data. The computer vision thereby allows the tracking of the movement of the moveable object. Besides tracking the movement or position of the subject, computer vision may be used for subject recognition or, in other words, identification.

According to an example, the data may be based on a detection of a position of the moveable subject and the tracking of the movement of the moveable subject may be comprising a detection of a changed position of the moveable subject based on its movement. In other words, the tracked movement may comprise tracking the position of the subject inside the cabin. Alternatively, or additionally, the orientation of the subject may be tracked by detecting it and detecting a changed orientation of the moveable subject. Specifically, the computer vision algorithm may detect the position and/or orientation of the subject in continuously or periodically captured images and/or video and thereby track the movement of the subject over time.

According to an example, the data may be based on classifying the subject as being moveable. In particular, a classification of the subject as being a moveable object may be carried out by the method. Such classification may be based on computer vision. For example, if the subject is normally not present or predefined in the cabin, e.g., not a seat, or is moved, the computer vision may determine that the subject is moveable. Alternatively, subject recognition may be performed, e.g., to determine the type of the subject. Consequently, its movement may be tracked.

According to an example, the moveable subject may be an occupant, an occupant object, or an electronic occupant device. The occupant object may for example be any non-electronic device such as a book, a magazine, a tool, a toy, and similar. The electronic occupant device may be any electronic device usable by the occupant such as a smartphone, a tablet computer, a notebook computer, and similar. In particular, the method may comprise recognizing or identifying the subject as either one of the occupant, occupant object, or electronic occupant device, e.g., based on computer vision. Similarly, the type of occupant object or the type of electronic occupant device may optionally be identified, e.g., based on computer vision. Also, characteristics of the occupant, such as size and/or age, may be optionally identified, e.g., based on computer vision. The instructions may be further based on the recognition or identification of the subject as occupant, occupant object, or electronic occupant device, and optionally its characteristics or type. Thereby, the adaptation of the interior lighting of the cabin may correspond to the type of object or its characteristics. For example, in case the moveable object is a book, the interior lighting may have a greater illumination intensity according to the instructions compared to when the moveable object is a tablet computer because the tablet computer may produce illumination by itself, thereby requiring less interior lighting for the occupant to read text displayed on the tablet computer compared to a book.

According to an example, the adapting of the interior lighting may be comprising at least one of adapting a position of an illuminated area, adapting a size of an illuminated area, adapting an illumination intensity of the at least one interior lighting device, and selecting one or more interior lighting devices for the illumination from multiple interior lighting devices inside the vehicle. For example, the adapting of the position of the illuminated area may be carried out by shifting the illuminated area, e.g., by adjusting the position of the one or more light sources of the at least one interior lighting device. For example, the size of the illumination area can be increased or decreased by increasing or decreasing a size of an illumination cone of the at least one interior lighting device. For example, the illumination intensity of the one or more light sources of the at least one interior lighting device may be adapted within a predetermined range of illumination intensity and/or based on a fixed or variable intensity setting as described herein. Moreover, for example, there may be multiple interior lighting devices and the adapting of the interior lighting may comprise selecting one or more interior lighting devices outside of these multiple interior lighting devices for producing the interior lighting. For example, the interior lighting device(s) for the interior lighting may be selected based on their positioning such that the moveable subject may be optimally illuminated, e.g., with the required brightness, without disturbing other occupants and/or without being obstructed.

According to an example, the adapting of the interior lighting may be at least partially based on user settings, the user settings comprising at least one setting for at least one of a sensitivity and a speed of adapting the interior lighting in proportion to the movement of the moveable subject. Thereby, the user, e.g., an occupant of the vehicle, may set a sensitivity and/or speed of the adapting of the interior lighting in proportion to the movement of the moveable subject. The sensitivity setting may define how much movement is required for the interior lighting to be adapted. For example, at a low sensitivity setting, small movements of the subject will not trigger adaption of the interior lighting. At a high sensitivity setting, even small movements of the subject will trigger an adaption of the interior lighting, e.g., an adjustment of the illuminated area such that the brightest area is kept in the same location of the subject. The speed may define how quickly the adaptation of the interior lighting is carried out after the movement. For example, at a lower speed setting, the interior lighting will be adapted slowly, e.g., after 3 or 5 seconds of the movement, whereas at a higher speed setting, the interior lighting will be adapted quickly, e.g., after 1 second of the movement. Similarly, as discussed herein, the user may be able to provide additional or alternative settings such as a setting for the illumination intensity, for a light cone size or diameter, a selection of one or more interior lighting devices to follow the moveable subject based on their location inside the vehicle, and/or similar.

According to an example, the user settings may be based on at least one voice command of an occupant inside the cabin. Additionally, or alternatively, the detected moveable subject and the user settings may be provided for display on at least one of a vehicle interface and an electronic occupant device. For example, the vehicle may comprise one or more microphones for recording the voice command of the occupant. The voice command may be a specific command spoken by the occupant or analyzed from natural language or speaking by the occupant. Moreover, the vehicle may have a vehicle interface, which may be comprising a touch display. Such vehicle interface may be provided for each of the occupants or as a central vehicle interface, for example. Alternatively, or additionally, the vehicle may be coupled wirelessly or by wire to an electronic occupant device, e.g., a smartphone, tablet computer or similar. In any case, through the vehicle interface or electronic occupant device, the occupant may be able to provide the user settings in addition to or as alternative to the voice command.

According to an example, the method may be further comprising determining a shadow from an occupant inside the cabin on the moveable subject, the adapting of the interior lighting comprising switching on or increasing an illumination intensity of at least one of multiple interior lighting devices inside the vehicle. Hence, for example, if the occupant is blocking the interior lighting from one of multiple interior lighting devices onto a subject, thereby casting a shadow on it, the method may notice this and provide the illumination of the subject by using one or more other interior lighting devices, e.g., by switching one or more of these one or increasing the illumination intensity, thereby compensating for the shadow / obstruction. Once the shadow is gone, e.g., because the occupant moves out of the light cone of the interior lighting device, the previous interior lighting may be provided once again. This functionality may be referred to as "ignore shadows" and it may be possible that this functionality is activated or deactivated as a user setting. If activated, the interior lighting devices will not compensate the shadow on the moveable object, whereas if deactivated, the interior lighting devices will compensate the shadow as explained.

According to an example, the moveable subject may be an occupant inside the cabin, the tracked movement may be indicating that the occupant has fallen asleep or is about to fall asleep, and the adapting of the interior lighting of the moveable object may comprise switching off the at least one interior lighting device. For detecting that the occupant has fallen asleep or is about to fall asleep, the method may for example track the movement of the eyes of the occupant or track the body movements of the occupant. Thereby, the method may notice that the interior lighting is interfering with the occupant's action of sleeping and thus switch off at least the interior lighting device which would otherwise disturb their sleep. In addition, a smartwatch of the occupant may be connectable to the vehicle such that its parameters may be read out to detect that the occupant has fallen asleep or is about to fall asleep. Alternatively, instead of a sleep mode or functionality, there may be a mode or functionality for keeping the occupant awake. Instead of the switching off the at least one interior lighting device, the interior lighting may be adapted to keep the occupant awake. For example, the illumination intensity of the interior lighting may be adapted or other functions such as blinking interior lighting or moving interior lighting may be provided.

According to an example, the moveable subject may be an occupant inside the cabin, the method may be comprising determining an activity of the occupant based on the tracked movement of the occupant, and the interior lighting may be adapted based on the determined activity of the occupant. For example, a parental control mode or functionality may be provided thereby, in particular together with subject recognition, e.g., age and/or size, of the occupant. Typically, children are less aware of their surroundings and may not manually adapt interior lighting settings. Hence, it may happen that children are not using interior lighting, e.g., when trying to read a book or use a tablet computer, or use excessive interior lighting, e.g., when trying to sleep. In any case, by determining the activity of a child or an adult occupant, e.g., reading, sleeping, or similar, the interior lighting may be specifically adapted to the determined activity, e.g., no light or less light for a sleeping or resting activity, lights on or more lights for reading a book, and similar. The activity may be determined based on computer vision, for example.

According to a second aspect, there is provided a data processing system configured to carry out the method of the first aspect.

The data processing system may comprise one or more data processing apparatuses or, in other words, computers, which may comprise a processor or CPU and a data storage, for example. The data storage may store a computer program which, when executed by the processor or CPU, carries out the method of the first aspect.

According to a third aspect, there is provided an interior lighting system for a vehicle, the interior lighting system comprising the data processing system of the second aspect, at least one interior lighting device and at least one surveillance device.

As mentioned herein, the interior lighting system may also comprise multiple interior lighting devices and/or multiple surveillance devices.

According to a fourth aspect, there is provided a vehicle comprising the interior lighting system of the third aspect.

The vehicle may be a car, in particular a passenger car, or a truck. However, the vehicle may alternatively be an airplane, a train or similar. The vehicle may be at least partially or fully autonomous.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic illustration of a vehicle;
- Figure 2: shows a schematic illustration of a method for adapting an interior lighting of a cabin of the vehicle of Fig 1;
- Figure 3: shows an electronic occupant device showing moveable subjects inside the cabin of the vehicle of Fig. 1;
- Figures 4a, 4b: show different interior lightings for illumination of a moveable subject inside the cabin of the vehicle of Fig. 1;
- Figures 5a, 5b: show an exemplary adaptation of the interior lighting inside the cabin of the vehicle of Fig. 1;
- Figure 6: shows another exemplary adaptation of the interior lighting inside the cabin of the vehicle of Fig. 1; and
- Figure 7: shows yet another exemplary adaptation of the interior lighting inside the cabin of the vehicle of Fig. 1.

### DETAILED DESCRIPTION

The Figures are merely schematic representations and serve only to illustrate examples of the disclosure. Identical or equivalent elements are in principle provided with the same reference signs.

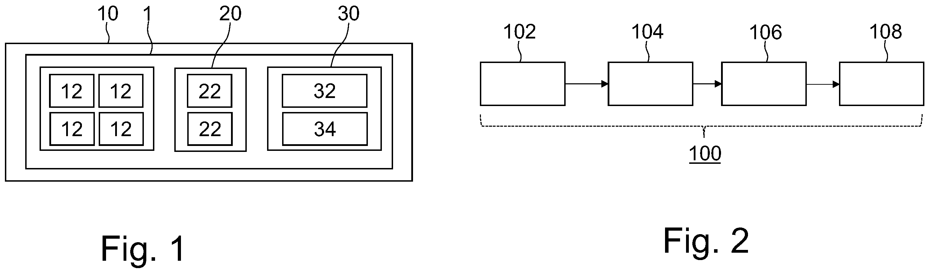

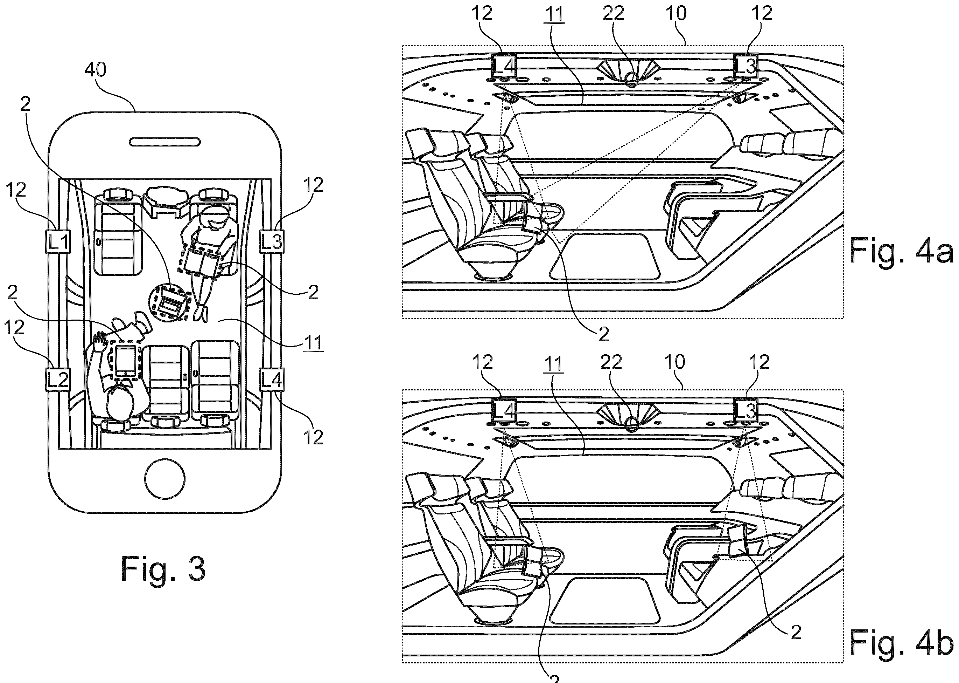

Figure 1 shows a schematic illustration of a vehicle 10 comprising an interior lighting system 1 for interior lighting of a cabin 11 of the vehicle 10 (see Figs. 4a, 4b). The interior lighting may also be referred to as an interior illumination of the cabin 11. As shown in Figs. 1, 4a and 4b, the interior lighting system 1 may comprise multiple interior lighting devices 12, wherein each one may have one or more separate light sources, which may be adaptable to illuminate different areas inside the cabin 11, illuminate the areas inside the cabin 11 with different intensity, and/or illuminate different sizes of areas inside the cabin 11, e.g., by adjusting their illumination cone. Merely as an example, the number of shown interior lighting devices 12 is four but can alternatively be less or more.

Moreover, the interior lighting system 1 comprises a surveillance system 20, which may comprise one or more surveillance devices 22. As an example, in Fig. 1, two surveillance devices 22 are shown, whereas in Figs. 4a to 7 only one surveillance device 22 is shown. For example, the one or more surveillance devices 22 may be cameras inside the vehicle 10.

Further, the interior lighting system 1 comprises a data processing system 30 in the form of a data processing apparatus having a processor 32 and a data storage 34. The data storage 34 stores a computer program which, when executed by the processor 32, at least partially carries out the method 100 as shown in Fig. 2.

The method 100 shown schematically in Fig. 2 is configured for adapting the interior lighting of the cabin 11 of the vehicle 10 based on a tracked movement of a subject 2. In a first step 102 of method 100, data indicative of a moveable subject 2 inside the cabin 11 is obtained from the surveillance device 22 (see Figs. 4a, 4b) and by the data processing system 30. The data may be based on a detection of the position of the moveable subject 2. Such data may be continuously obtained by repeating step 102 and/or the data is obtained at least for a certain time frame, e.g., periodically such as every a few seconds, or continuously. For example, based on computer vision executed by the processor 32, the subject 2 inside the Figs. 4a and 4b may be identified as a book or any other occupant object 2.

Then, in a second step 104 of method 100, the continuously obtained data is being used for tracking a movement of the moveable subject 2 by the data processing system 30 and based on computer vision. For example, as shown in Fig. 4b, the subject 2 may be moved from a left seat inside the cabin 11 to a right seat inside the cabin 11 (an occupant reading the book not being shown in Figs. 4a, 4b). Hence, the data processing system 30 may notice the changed position based on the tracked movement.

Then, in a third step 106 of method 100, instructions are provided by the data processing system 30 for the lighting device system 10 for adapting the interior lighting of the cabin 11, wherein the instructions are based on the tracked movement of the moveable subject 2.

Consequently, in a fourth step 108 of method 100, these instructions may be carried out by the interior lighting system 10 As shown in the example of Fig. 4b, the light from the interior lighting device 12 labeled as L3 may consequently illuminate the subject 2 at the position of the right seat in Fig. 4b. Additionally, the interior lighting device 12 labelled as L4, which illuminated the subject 2 in Fig. 4a, may also follow the subject 2 for illumination thereof or, alternatively, as shown in Fig. 4b, maintain illuminating the same area as in Fig. 4a or be switched off, for example. For example, the adaptation of the interior lighting of the subject 2 may be based on user settings, which may be set via voice commands, on a vehicle interface or on an electronic occupant device 40, which may be connected to the interior lighting system 1, such as the one shown in Fig. 3.

Moreover, the electronic occupant device 40 may display the current situation of the interior lighting of the cabin 11 as exemplary shown in Fig. 3. Here, for example, three different subject 2 have been identified as moveable subjects 2 or may be selected by a user or occupant for having their movement tracked and adapt the interior lighting based on the tracked movement of these. Accordingly, the method 100 may obtain data indicative of the moveable subjects 2 and track their movement based on the data for providing instructions to the interior lighting devices 12 for adapting the interior lighting as exemplary described with respect to Figs. 4a and 4b.

In the example of Figure 3, two occupants using different subjects 2 in the form of occupant objects are shown. For example, the occupant at the lower part of Fig. 3 is using a tablet computer as subject 2 in their hands and potentially a notebook computer as subject 2, which is positioned on a table inside the cabin 11, whereas the occupant at the upper part of Fig. 3 is reading a book as subject 2. The preferences of the occupants may be different for adapting the interior lighting for each one of the subject 2. For example, the method 100 may provide that the types of subject 2 are recognized by computer vision and the interior lighting is adapted based on the type of subject. Alternatively, or additionally, e.g., via their electronic occupant devices 40, the occupants may be able to provide user settings. An exemplary user setting may be a sensitivity and/or speed of adapting the interior lighting in proportion to a movement of the moveable subject 2. Additionally, or alternatively, a user setting may be the illumination intensity, size of the illuminated area, and similar. In any case, for example, if the occupant in the upper part of Fig. 3 moves their subject 2 to another side or sits next to the other occupant, the interior lighting may be adapted to continue illuminating the subject 2 as explained exemplary with reference to Figs. 4a and 4b.

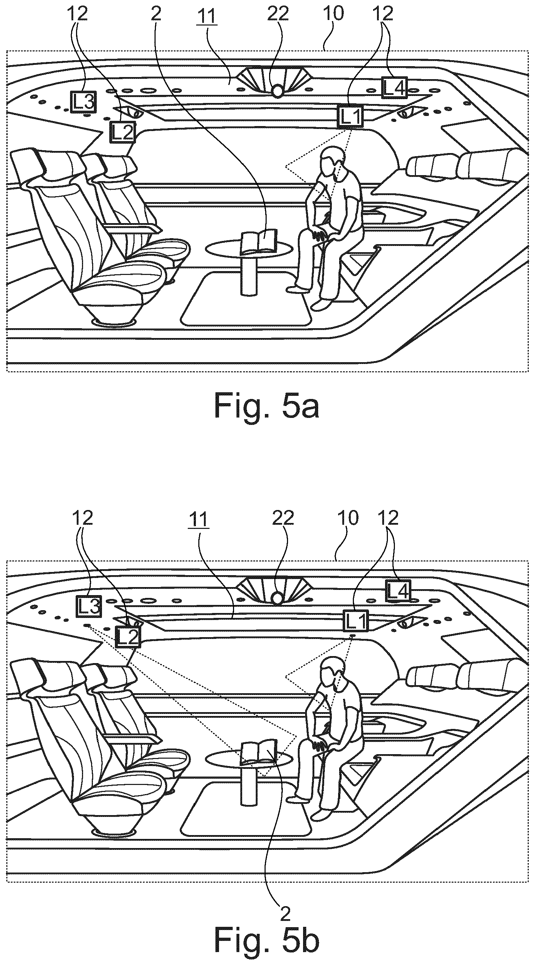

Figures 5a and 5b show an example of an adaptation of the interior lighting inside the vehicle 10 based on a shadow being cast onto a moveable subject 2 placed on a table inside the cabin 11. For example, if the occupant wishes the subject 2 inside the cabin 11 to be illuminated in Fig. 5a, depending on the position of the occupant, the respective interior lighting device 12, in the example of Fig. 5a being the one labelled as L1, may be obstructed, such that the subject 2 is not being illuminated in its current position. The method 100 may be able to determine that a shadow is cast based on computer vision and correspondingly adapt the interior lighting by switching on or increasing an illumination intensity of at least one other lighting device 12, e.g., the one labelled L3 in the example of Fig. 5b. Thereby, the method 100 may provide that the moveable object 2 is illuminated independent of the movement or position of the occupant, thereby not restricting their movement and thus comfort inside the cabin 11.

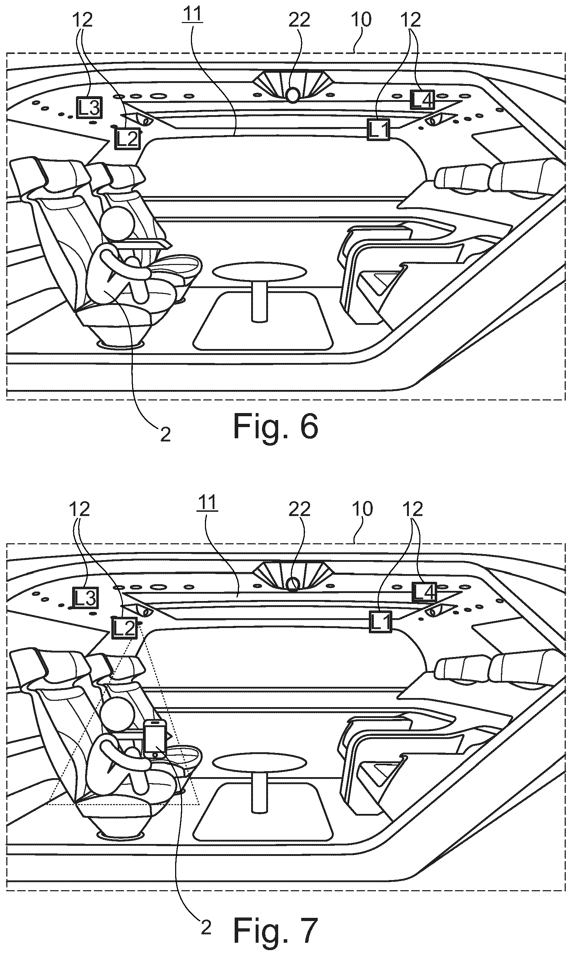

Figure 6 shows an example of a subject 2 in form of an occupant, in particular a child. Based on computer vision, the subject 2 may be identified as a child. Moreover, based on computer vision, an action or task of the occupant may be identified. For example, the tracked movement of the occupant may be indicating that the occupant has fallen asleep or is about to fall asleep. Accordingly, the interior lighting devices 12 may be switched off to allow the occupant to sleep as shown in Fig. 6.

Figure 7 shows an example of a subject 2 in form of a smartphone of an occupant in form of a child. Here, the method 100 may adapt the interior lighting based on the identification of the subject 2 as a smartphone and, optionally, the occupant being a child, such that it is determined that the lighting conditions need to be adapted to increase the visibility and reduce eye strain of the occupant.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of', in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]".

Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

Any designation of methods, steps and elements as first, second, etc. or similar as provided herein is merely intended to make the methods, their steps and elements referenceable and distinguishable from one another. By no means does the designation of methods, steps and elements constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the examples of the disclosure described herein are capable of operation in other sequences than described or illustrated herein.

In the context of the present disclosure any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope of the claims.

### LIST OF REFERENCE SIGNS

- 1: interior lighting system
- 10: vehicle
- 12: interior lighting device
- 20: surveillance system
- 22: surveillance device
- 30: data processing system
- 32: processor
- 34: data storage
- 40: electronic occupant device
- 100: method
- 102-108: steps

## Claims

1. A method (100) for adapting interior lighting of a cabin (11) of a vehicle (10), the method (100) comprising:
- obtaining data indicative of a moveable subject (2) inside the cabin (11) from at least one surveillance device (22);
- using the obtained data for tracking a movement of the moveable subject (2); and
- providing instructions for at least one interior lighting device (12) for adapting the interior lighting of the cabin (11), wherein the instructions are based on the tracked movement of the moveable subject (2).

2. The method (100) of claim 1, the instructions being configured to illuminate the detected moveable subject (2), wherein the illumination of the moveable subject (2) is being adapted.

3. The method (100) of claim 1 or 2, at least one of the data and the tracking of the movement of the moveable subject (2) being at least based on computer vision.

4. The method (100) of any one of the previous claims, the data being based on a detection of a position of the moveable subject (2) and the tracking of the movement of the moveable subject (2) comprising a detection of a changed position of the moveable subject (2) based on its movement.

5. The method (100) of any one of the previous claims, the data being based on classifying the subject (2) as being moveable.

6. The method (100) of any one of the previous claims, the moveable subject (2) being an occupant, an occupant object, or an electronic occupant device.

7. The method (100) of any one of the previous claims, the adapting of the interior lighting comprising at least one of adapting a position of an illuminated area, adapting a size of an illuminated area, adapting an illumination intensity of the at least one interior lighting device (12), and selecting one or more interior lighting devices (12) for the illumination from multiple interior lighting devices (12) inside the vehicle (10).

8. The method (100) of any one of the previous claims, the adapting of the interior lighting being at least partially based on user settings, the user settings comprising at least one setting for at least one of a sensitivity and a speed of adapting the interior lighting in proportion to the movement of the moveable subject (2).

9. The method (100) of claim 8, the user settings being based on at least one voice command of an occupant inside the cabin (11), and/or
the detected moveable subject (2) and the user settings being provided for display on at least one of a vehicle interface and an electronic occupant device (40).

10. The method (100) of any one of the previous claims, the method (100) further comprising:
- determining a shadow from an occupant inside the cabin (11) on the moveable subject (2),
the adapting of the interior lighting comprising switching on or increasing an illumination intensity of at least one of multiple interior lighting devices (12) inside the vehicle (10).

11. The method (100) of any one of the previous claims, the moveable subject (2) being an occupant inside the cabin (11), the tracked movement indicating that the occupant has fallen asleep or is about to fall asleep, and the adapting of the interior lighting of the moveable subject (2) comprises switching off the at least one interior lighting device (12).

12. The method (100) of any one of the previous claims, the moveable subject (2) being an occupant inside the cabin (11), the method (100) comprising determining an activity of the occupant based on the tracked movement of the occupant, and the interior lighting being adapted based on the determined activity of the occupant.

13. A data processing system (30) configured to carry out the method (100) of any one of the previous claims.

14. An interior lighting system (1) for a vehicle (10), the interior lighting system (1) comprising the data processing system of claim 13, at least one interior lighting device (12) and at least one surveillance device (22).

15. A vehicle (10) comprising the interior lighting system (1) of claim 14.

## Amended claims

### Amended claims in accordance with Rule 137(2) EPC.

1. A method (100) for adapting interior lighting of a cabin (11) of a vehicle (10), the method (100) comprising:
- obtaining data indicative of a moveable subject (2) inside the cabin (11) from at least one surveillance device (22), the data being based on classifying the subject (2) as being moveable;
- using the obtained data for tracking a movement of the moveable subject (2); and
- providing instructions for at least one interior lighting device (12) for adapting the interior lighting of the cabin (11), wherein the instructions are based on the tracked movement of the moveable subject (2).

2. The method (100) of claim 1, the instructions being configured to illuminate the detected moveable subject (2), wherein the illumination of the moveable subject (2) is being adapted.

3. The method (100) of claim 1 or 2, at least one of the data and the tracking of the movement of the moveable subject (2) being at least based on computer vision.

4. The method (100) of any one of the previous claims, the data being based on a detection of a position of the moveable subject (2) and the tracking of the movement of the moveable subject (2) comprising a detection of a changed position of the moveable subject (2) based on its movement.

5. The method (100) of any one of the previous claims, the moveable subject (2) being an occupant, an occupant object, or an electronic occupant device.

6. The method (100) of any one of the previous claims, the adapting of the interior lighting comprising at least one of adapting a position of an illuminated area, adapting a size of an illuminated area, adapting an illumination intensity of the at least one interior lighting device (12), and selecting one or more interior lighting devices (12) for the illumination from multiple interior lighting devices (12) inside the vehicle (10).

7. The method (100) of any one of the previous claims, the adapting of the interior lighting being at least partially based on user settings, the user settings comprising at least one setting for at least one of a sensitivity and a speed of adapting the interior lighting in proportion to the movement of the moveable subject (2).

8. The method (100) of claim 7, the user settings being based on at least one voice command of an occupant inside the cabin (11) obtained by the method (100), and/or the detected moveable subject (2) and the user settings being provided for display on at least one of a vehicle interface and an electronic occupant device (40).

9. The method (100) of any one of the previous claims, the method (100) further comprising:
- determining a shadow from an occupant inside the cabin (11) on the moveable subject (2),
wherein consequently the adapting of the interior lighting comprises switching on or increasing an illumination intensity of at least one of multiple interior lighting devices (12) inside the vehicle (10).

10. The method (100) of any one of the previous claims, the moveable subject (2) being an occupant inside the cabin (11), the tracked movement indicating that the occupant has fallen asleep or is about to fall asleep, and the adapting of the interior lighting of the moveable subject (2) comprises switching off the at least one interior lighting device (12).

11. The method (100) of any one of the previous claims, the moveable subject (2) being an occupant inside the cabin (11), the method (100) comprising determining an activity of the occupant based on the tracked movement of the occupant, and the interior lighting being adapted based on the determined activity of the occupant.

12. A data processing system (30) configured to carry out the method (100) of any one of the previous claims.

13. An interior lighting system (1) for a vehicle (10), the interior lighting system (1) comprising the data processing system of claim 12, at least one interior lighting device (12) and at least one surveillance device (22).

14. A vehicle (10) comprising the interior lighting system (1) of claim 13.
